# EUROPEAN PATENT APPLICATION

(11) **EP 2 878 212 A1**
(43) Date of publication of application: **03.06.2015**
(21) Application number: 13822877.0
(22) Date of filing: 11.07.2013
(51) Int. Cl.: A23L 3/32

(54) **METHOD FOR FORMING FUNCTIONAL SPACE, AND METHOD FOR PRODUCING OR PROCESSING FOOD OR FOODSTUFF USING SAME**

(30) Priority: 27.07.2012 JP 2012166969
(71) Applicant: Takashima, Noriyoshi, Numazu-shi, Shizuoka 410-0871 (JP); Takashima, Hiromitsu, Numazu-shi, Shizuoka 410-0871 (JP); Takashima, Kunihide, Numazu-shi, Shizuoka 410-0032 (JP)
(72) Inventor: TAKASHIMA, Noriyoshi, Shizuoka 4100871 (JP)
(74) Representative: Faulkner, Thomas John
(86) International application number: PCT/JP2013/069570
(87) International publication number: WO 2014/017383

(57) **Abstract**

A space in which negative charges are predominant is formed independently of the structure of equipment or an apparatus in a process of producing or processing a food or food material by actively exploiting the functions of charcoal or bamboo charcoal.

A paint 2a composed mainly of graphitized charcoal or bamboo charcoal is applied to a ceramic sheet 21 in such an amount that the ceramic sheet 21 has a resistance value of 3 ± 1 kilohms (KΩ), thereby forming a plane electrode 2; a side of the plane electrode 2 to which the paint 2a is not applied is attached to the wall surface portions 11, the ceiling portion 12, and a chamber 12a of a storeroom 1a or 1b such that the side of the plane electrode 2 is in contact with the wall surface portions 11, the ceiling portion 12, and a chamber 12a of the storeroom 1a or 1b; and a negative direct voltage in the range of -70 to -100 volts is applied from an electrification member 3 to a plane electrode 2 (the paint 2a) through an electric wire to excite carbon in the plane electrode 2, thereby forming a space in which negative charges are predominant in the storeroom 1a or 1b using electrons (e) in the plane electrode 2 or emitted.

## Description

### Technical Field

The present invention relates to a method for forming a functional space utilizing the electrical characteristics of graphitized charcoal or bamboo charcoal serving as a semiconductor and to a method for producing or processing a food or food material using the method for forming a functional space.

### Background Art

An invention relating to an apparatus for freshness preservation, bacteriostasis, and sterilization of foodstuffs installed integrally or retrofitted in a housing, such as a refrigerator, is proposed in Patent Literature 1.

This invention relates to an apparatus for performing each function of freshness preservation, sterilization, and thawing of foodstuffs, particularly perishable foods, and tries to maintain freshness of perishable foods by applying a ceramic powder for emitting far-infrared light to both side walls of a vegetable drawer of a refrigerator for preserving perishable foods, heating the ceramic powder with heating wires made of a heating material, and emitting far-infrared light into the vegetable drawer to achieve a predetermined heating and holding temperature. Furthermore, perishable foods are tried to be thawed by arranging a heating member at a predetermined position in a refrigerator, the heating member being a ceramic processed nichrome wire, which is a nichrome wire made of a heating material to which a ceramic for emitting far-infrared light is added, coated with a synthetic resin material, and allowing the heating member to generate heat and emit far-infrared light, thereby achieving a predetermined heating and holding temperature.

Furthermore, an invention relating to a container made of a bamboo charcoal tube that is focused on the action of bamboo charcoal that enhances maturation and umami taste of foods or food materials is proposed in the following Patent Literature 2. As described above, techniques for freshness preservation, bacteriostasis, maturation and so on of foods or food materials have been developed from various points of view.

### Prior Art Documents

### Patent documents

Patent document 1: Japanese Unexamined Patent Application Publication No. 2004-41047
Patent document 2: Japanese Unexamined Patent Application Publication No. 2010-189007

### Summary of Invention

### Problem to be solved by the invention

Charcoal, bamboo charcoal and so on fired to the graphite state are attractive as multifunctional materials. This is because they are known to have effects and so on of deodorization and far-infrared light emission based on their porous structures and the physical properties of carbon as a semiconductor. However, a food or food material having a new feature based on these functions and effects has not been developed.

The inventor has focused on the role of electrons in oxidation and reduction based on the conception that all substances have electricity. Electrons are transferred in a direction opposite to the direction of electric current. A flow of electrons and an electric current have the relationship I (ampere) = dQ (amount of electric charge)/dT (time). For example, when an electric current of 0.2 mA flows from a positively charged substance to a negatively charged substance, 1.25 x 10¹⁶ electrons are transferred from the negatively charged substance to the positively charged substance at the same speed as light. Since giving and receiving of electrons causes reduction, for example, if this phenomenon is applied to foods and food materials, which almost have positive charges, effects, such as removal of free radicals (active oxygen) and suppression of oxidation of lipids, can be expected. Thus, the present invention has been created from the idea that various things or methods having a new feature can be developed by forming a space in which negative charges are predominant and exploiting the action of electrons in the space. Furthermore, in the creation of the present invention, while food or food material safety is maintained, development of various things or methods having a new feature in safe and secure work environments for workers for food processing and production was taken into consideration.

The present invention has been proposed under these actual conditions, has focused on a traditional food processing method of warehouse style, and aims to provide a method for forming a functional space that can produce antioxidative, anti-dripping (liquid leakage phenomenon), maturative, and bacteriostatic effects on foods or food materials by actively exploiting electrons according to a principle of oxidation and reduction of substances in addition to the electrical characteristics of graphitized charcoal or bamboo charcoal having the same wavelength region as the wavelength region of an atom constituting animal and plant food materials, that is, carbon, as well as a method for producing or processing a food or food material using the method for forming such a functional space.

### Means for solving the Problem

In order to achieve the object, the present invention is characterized by a method for forming a functional space that can produce antioxidative, anti-dripping (liquid leakage phenomenon), maturative, and bacteriostatic effects on a food or food material, which includes:applying a paint composed mainly of graphitized charcoal or bamboo charcoal to a flat insulator in such an amount that the insulator has a resistance value of 3 ± 1 kilohms, and forming a plane electrode with the insulator coated with the paint, the plane electrode having an area of at least one-half the volume of a storeroom for storing the food or food material; attaching a side of the plane electrode to which the paint is not applied to an inner wall or ceiling or both of the storeroom; and applying a negative direct voltage in the range of -70 to -100 volts to the plane electrode to form a space in which negative charges are predominant in the storeroom.

Thus, a space having air quality containing many negatively charged fine particles is formed in the storeroom by applying a negative direct voltage in the range of -70 to -100 volts to the plane electrode to excite carbon in graphitized charcoal or bamboo charcoal, increasing the electron density of the polycrystalline graphitized charcoal or bamboo charcoal or allowing electrons to be emitted, thereby decreasing the number of positively charged fine particles in the space. The storeroom is preferably composed of wall materials joined together via a frame member made of a hard vinyl chloride.

The present invention is also a method for producing or processing a food or food material, which includes: forming a space in which negative charges are predominant in a storeroom using the method for forming a functional space; and producing or processing the food or food material under antioxidative, anti-dripping (liquid leakage phenomenon), maturative, and bacteriostatic effects. In particular, the present invention is characterized by storing the food or food material in a storeroom for a predetermined period of time, the storeroom having a space in which negative charges are predominant; and producing or processing the food or food material under microbial control for the predetermined period of time.

### Advantageous Effects of Invention

A method for forming a functional space according to the present invention actively exploits the usefulness of the electrical characteristics of graphitized charcoal or bamboo charcoal as a semiconductor for a food or food material. More specifically, the method can produce antioxidative and anti-dripping (liquid leakage phenomenon) effects, as well as maturative effects of increasing the amount of amino acid umami taste component and bacteriostatic effects of such as activating useful bacteria and suppressing the growth of harmful bacteria on a food or food material.

The method first includes applying a paint composed mainly of graphitized charcoal or bamboo charcoal to a flat insulator in such an amount that the insulator has a resistance value of 3 ± 1 kilohms, and forming a plane electrode with the insulator coated with the paint, the plane electrode having an area of at least one-half the volume of a storeroom for storing the food or food material. The method secondly includes attaching a side of the plane electrode to which the paint is not applied to an inner wall or ceiling or both of the storeroom. This can create an environment for producing the effects of graphitized charcoal or bamboo charcoal.

A homogeneous space in which negative charges are predominant is formed in the storeroom by applying a negative direct voltage in the range of -70 to -100 volts to the plane electrode to excite carbon in graphitized charcoal or bamboo charcoal, thereby increasing the electron density of the graphitized charcoal or bamboo charcoal or allowing electrons to be emitted from the graphitized charcoal or bamboo charcoal into the storeroom. Thus, in addition to the physical functions of the charcoal or bamboo charcoal, their electrical characteristics can also be exhibited. The present invention requires no heating and therefore can be applied to general storerooms at normal or room temperature and refrigerators and so on without causing heating damage to foods or food materials on which the effects are to be produced.

The formation of the space in which negative charges are predominant in the storeroom can decompose molecules generally in the cationic state responsible for a malodor and has a deodorizing function, in addition to physical adsorption of charcoal or bamboo charcoal. Decomposition of cations and free radicals (active oxygen) can produce antioxidative effects and suppress a decrease in the amount of vitamin C in foods or food materials. In the space in which negative charges are predominant, giving and receiving of electrons can effectively enhance reducing ability, suppress dripping phenomena in fish and meat, activate useful fermentative bacteria, such as lactobacillus or yeast, and increase the amount of glutamic acid or inosinic acid umami taste component.

Although these effects include the effects of far-infrared light described in the above Patent document 1, far-infrared light waves have a limited effective area and require heating. In contrast, in a homogeneous space according to the present invention in which negative charges are predominant, the action of the resonance of water in a food or food material crushes water clusters and makes the surfaces active, and giving and receiving of electrons enhances reducing ability and decreases electric potential, thereby suppressing ion leakage due to electrical excitability of a cell membrane. Furthermore, heating is not required. Furthermore, lactobacillus or yeast, which is activated in a reduction area in which atoms become stable by electron supply, weakens the activity and suppresses the growth of harmful bacteria, such as Escherichia coli, a coliform group, and viable bacteria, that are active and grown in an oxidation area in which atoms become highly electrically positive by electron detachment. Furthermore, since graphitized charcoal or bamboo charcoal is weakly alkaline, fine-powdered graphitized charcoal or bamboo charcoal having an increased specific surface area has an enhanced humidity-control function and a fungicidal effect. Furthermore, the humidity-control function of graphitized charcoal or bamboo charcoal can suppress condensation in the storeroom and prevent an electric leakage, for example, when a negative direct voltage is applied to the plane electrode. This allows the advantageous effects of the space in which negative charges are predominant to be reliably produced on food processing and production, thereby providing safe and secure work environments for workers for food processing and production.

Furthermore, since the storeroom is composed of wall materials joined together via a frame made of a hard vinyl chloride, insulation between the wall materials is maintained, for example, when a negative direct voltage in the range of -70 to -100 volts is applied to the plane electrode. This allows the advantageous effects of the space in which negative charges are predominant to be produced on food processing and production, thereby providing safe and secure work environments for workers for food processing and production.

In a method for producing or processing a food or food material according to the present invention, a space in which negative charges are predominant is formed in a storeroom using such a method for forming a functional space as described above. This allows antioxidative, anti-dripping (liquid leakage phenomenon), maturative, and bacteriostatic effects to be produced on a food or food material. Thus, the food or food material can be produced or processed in an environment where such effects are produced. Furthermore, in a space in which negative charges are predominant in a storeroom, giving and receiving of electrons can enhance reducing ability and activate useful fermentative bacteria, such as lactobacillus or yeast, and a food or food material can be produced or processed utilizing microbial control effects of weakening the activity and suppressing the growth of harmful bacteria, such as Escherichia coli, a coliform group, and viable bacteria, that are active and grown in a highly electrically positive oxidation area. This can improve the quality (for example, maturation quality) of the food or food material and provide body, umami taste, and functionality to the food or food material.

A food or food material thus produced or processed has improved quality in that it brings out flavor intrinsic to the material, such as umami taste, body, and aroma, and adds new functions, such as an increased expiration date, expected antioxidative effects due to enhanced reducing ability, or anti-aging foods, and can be commercialized as a new food or food material. Since the present invention requires no heating, foods or food materials can be produced or processed without causing heating damage to the foods or food materials.

### Brief Description of Drawings

Fig. 1 illustrates a storeroom in which a method for forming a functional space according to the present invention is performed and is a schematic explanatory view of the formation of a space in which negative charges are predominant. Fig. 1(a) illustrates a storeroom of general type, and Fig. 1(b) illustrates a storeroom of a chamber type.
Fig. 2 is an explanatory view of a principal part of a ceramic sheet to be attached to a ceiling portion in a storeroom in which a method for forming a functional space according to the present invention is performed. Fig. 2(a) illustrates a ceramic sheet attached to a wood base, and Fig. 2(b) illustrates a ceramic sheet attached to a light-gauge steel frame base.
Fig. 3 is an explanatory view of a principal part of a ceramic sheet attached to a wall surface portion in a storeroom in which a method for forming a functional space according to the present invention is performed. Fig. 3(a) illustrates a ceramic sheet attached to an external corner of a wood base. Fig. 3(b) illustrates a ceramic sheet attached to an internal corner of a wood base. Figs. 3(c) and 3(d) illustrate a ceramic sheet attached to a light-gauge steel frame base filled with a putty, for example.
Fig. 4 is an explanatory view of a principal part of a ceramic sheet attached to a wall surface portion in the case where a method for forming a functional space according to the present invention is performed in an existing facility that includes a wall surface portion made of a steel sheet. Fig. 4(a) illustrates a ceramic sheet attached to an existing facility which has low surface accuracy of a steal sheet. Fig. 4(b) illustrates a ceramic sheet attached to an existing facility which has high surface accuracy of a steel sheet.
Fig. 5 is an explanatory view of an example of wall materials joined together via a frame made of a hard vinyl chloride when wall materials as wall surface portions are joined together.
Fig. 6 is an explanatory view of an electrification member for turning on electricity to a paint applied to a ceramic sheet in a method for forming a functional space according to the present invention. Fig. 6(a) illustrates the materials of the electrification member. Figs. 6(b) and 6(c) illustrate a process of manufacturing the electrification member. Fig. 6(d) illustrates a completed electrification member.
Fig. 7 is a line graph illustrating the humidity-control function of a plane electrode (paint).
Fig. 8 is a bar graph illustrating the action of inhibiting oxidation of an oil.
Fig. 9 is a bar graph illustrating the action of inhibiting degradation of vitamin C in Sencha (green tea) leaves.
Fig. 10 is a bar graph that shows a total amino acid content (mg/100 g) test on fish meat of dried horse mackerel and an effect of improving the quality of a food or food material.
Fig. 11 is a line graph that shows the growth of a coliform group per gram of dried horse mackerel and bacteriostatic effects on a food or food material.
Fig. 12 is a line graph that shows the growth of viable bacteria per gram of dried horse mackerel and bacteriostatic effects on a food or food material.
Fig. 13 is a bar graph that shows a total amino acid content (mg/g) test on beef stored for 10 days and an effect of improving the quality of a food or food material.

### Description of Embodiments

One embodiment of the present invention will be described in detail below with reference to attached drawings. This embodiment is only an example that realizes the structure of the present invention and may be modified in design without departing from the matters described in the claims of the present invention.

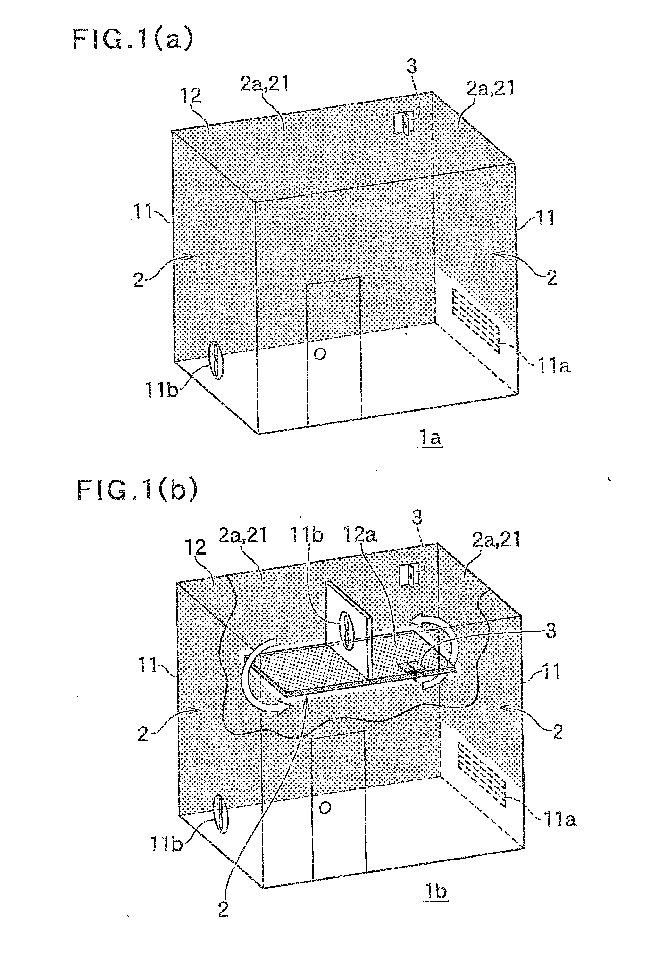

A method for forming a functional space according to the present invention is performed in a storeroom 1a or 1b, as illustrated in Fig. 1(a) or 1(b). More specifically, for example, the storeroom 1a of general type 2 m in width, 2 m in height, and 2 m in depth illustrated in Fig. 1(a) includes a plane electrode 2 on a wall surface portion 11 and a ceiling portion 12 thereof, the plane electrode 2 being formed by applying a paint 2a composed mainly of polycrystalline graphitized charcoal or bamboo charcoal to one side of a ceramic sheet 21, which is a flat insulator, in such an amount that the ceramic sheet 21 has a resistance value of 3 ± 1 kilohms (KΩ). The plane electrode 2 is attached to the wall surface portion 11 and the ceiling portion 12 such that the side of the plane electrode 2 not coated with the paint 2a is in contact with the wall surface portion 11 and the ceiling portion 12. An outside air inlet 11a and a ventilating fan 11b are disposed on the wall surface portion 11.

Furthermore, for example, the storeroom 1b of chamber type 2 m in width, 2 m in height, and 2 m in depth illustrated in Fig. 1(b) includes a chamber 12a on a ceiling portion 12 thereof and a plane electrode 2 on a wall surface portion 11 thereof and the chamber 12a, the plane electrode 2 being formed by applying a paint 2a composed mainly of polycrystalline graphitized charcoal or bamboo charcoal to one side of a ceramic sheet 21 in such an amount that the ceramic sheet 21 has a resistance value of 3 ± 1 kilohms (KΩ). The storeroom 1b includes an outside air inlet 11a and a ventilating fan 11b on the wall surface portion 11 as in the storeroom 1a illustrated in Fig. 1(a) and also includes a ventilating fan 11b on top of the chamber 12a. Furthermore, in the storeroom 1b, the side of the plane electrode 2 not coated with the paint 2a is attached so as to be in contact with the wall surface portion 11 and the chamber 12a.

The plane electrode 2 attached to the wall surface portion 11 and so on of the storeroom 1a or 1b is formed so as to have an area of at least one-half the volume of the storeroom 1a or 1b. Namely, since the storeroom 1a or 1b 2 m in width, 2 m in height, and 2 m in depth according to the present embodiment has a volume of 8 m³, the plane electrode 2 has an area of 4 m² or more. The plane electrode has an area of at least one-half the volume of the storehouse. In the case where the plane electrode 2 is attached to the wall surface portion 11 and the ceiling portion 12 or the chamber 12a of the storeroom 1a or 1b as in the present embodiment, the sum total of the areas of the plane electrodes 2 is at least one-half the volume of the storehouse, that is, 4 m² or more.

The reason that the relationship between the volume of the storeroom and the area of the plane electrode is defined as described above is that when the plane electrode formed by applying the paint to the flat insulator in such an amount that the plane electrode has a resistance value of 3 ± 1 kilohms (KΩ) does not have an area of at least one-half the volume of the storehouse, a homogeneous negative charge space that is adequate for producing the effects of the graphitized charcoal or bamboo charcoal may not be formed and may not produce the desired effects. The upper limit of the area of the plane electrodes corresponds to the area of the plane electrodes entirely formed on the wall surface portion and the ceiling portion of the storeroom. The plane electrodes may have an area greater than the number of the volume of the storeroom.

Furthermore, although the ceramic sheet 21 is used as a flat insulator in the present embodiment, the object of the present invention can be achieved by using any insulating plate, such as plywood, wood, gypsum board, calcium silicate board, or ceramic board.

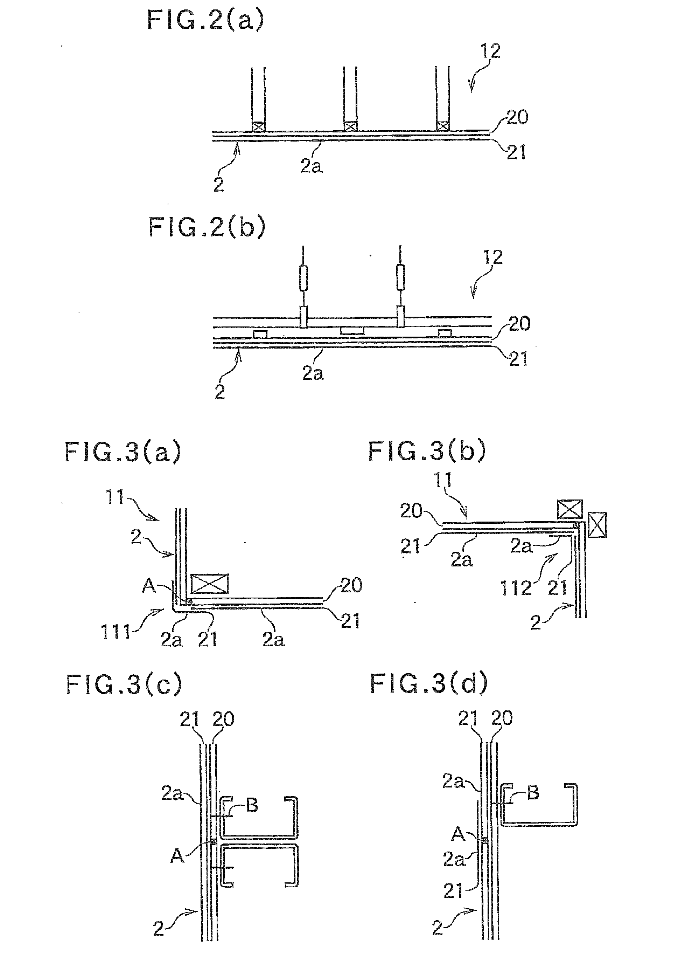

Next, an example of installation of the plane electrode 2 on the wall surface portion 11 or the ceiling portion 12 (the chamber 12a) will be described below with reference to Figs. 2 and 3.

As illustrated in Fig. 2(a), the plane electrode 2 is formed on a wood base of the ceiling portion 12 or the chamber 12a in the storeroom 1a or 1b by placing an underlining 20, for example, made of a plywood, gypsum, calcium silicate, or ceramic board on cradlings and attaching the side of the ceramic sheet 21 not coated with the paint 2a to the underlining 20. As illustrated in Fig. 2(b), the plane electrode 2 is formed on the ceiling portion 12 or the chamber 12a composed of light-gauge steel frames by placing an underlining 20 and attaching the side of the ceramic sheet 21 not coated with the paint 2a to the underlining 20.

In principle, the ceramic sheet 21 is attached to the underlining 20 with a two-sided adhesive tape or an adhesive and not with screws. When screws are exceptionally required, double ceramic sheets 21 are attached to the underlining 20, and the surfaces (heads) of the screws are placed between the double ceramic sheets 21 and should not be exposed in the storeroom 1a or 1b. This is to prevent an electric leakage from the surfaces (heads) of the screws. The paint 2a may be applied to only one surface exposed in the storeroom 1a or 1b of the double ceramic sheets 21.

Furthermore, in the storeroom 1a or 1b, as illustrated in Figs. 3(a) and 3(b), the plane electrode 2 is formed on a wood base of the wall surface portion 11 by composing the wall surface portion 11 with an underlining 20 that is filled with a filler A, such as a putty, in an external corner 111 or an internal corner 112 thereof and has no gap and attaching the side of the ceramic sheet 21 not coated with the paint 2a to the underlining 20. As illustrated in Figs. 3(c) and 3(d), the plane electrode 2 is formed on the wall surface portion 11 made of a light-gauge steel frame by composing the wall surface portion 11 with an underlining 20 that is filled with a filler A, such as a putty, in a seam thereof and has no gap and attaching the side of the ceramic sheet 21 not coated with the paint 2a to the underlining 20. In particular, as illustrated in Figs. 3(a), 3(b), and 3(d), when the plane electrodes 2 are formed over wall surface portions 11 adjacent to each other via the external corner 111 or the internal corner 112 or over the seam between the wall surface portions 11 (the underlinings 20), the ceramic sheets 21 coated with the paint 2a is preferably bonded together such that the ends of the plane electrodes 2 overlap with the ceramic sheets 21 coated with the paint 2a. This is to prevent an electric leakage from the ends of the plane electrodes 2.

Also in the case where the plane electrode 2 is formed on the wall surface portion 11, as in the formation of the plane electrode 2 on the ceiling portion 12 or the chamber 12, in principle, the ceramic sheet 21 should not be attached to the underlining 20 with screws. When screws are exceptionally required, the surfaces (heads) of the screws B should not be exposed in the storeroom 1a or 1b, for example, by using double sheets.

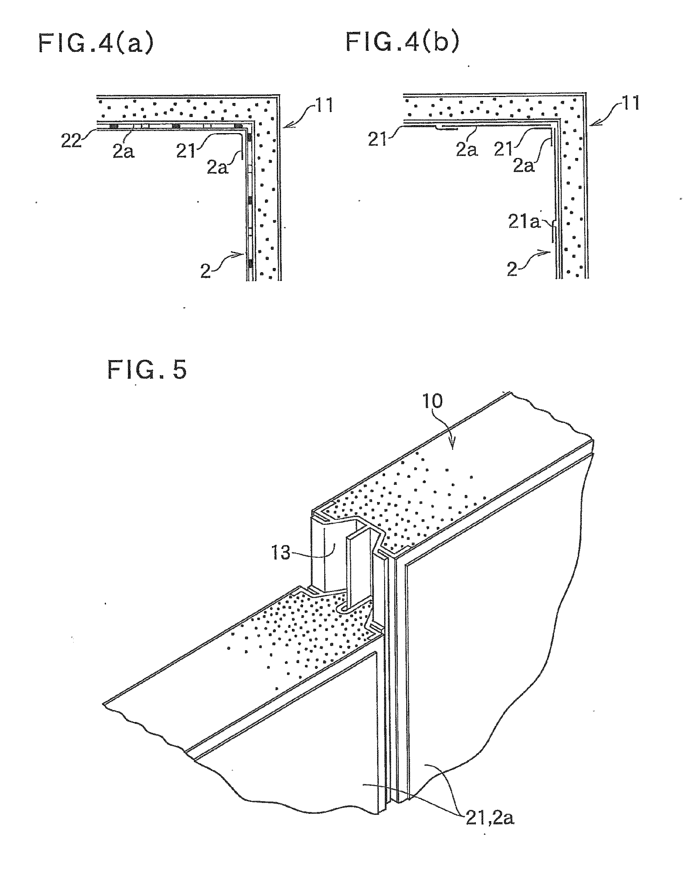

Implementation of a method for forming a functional space according to the present invention in an existing facility that includes a wall surface portion made of a steel sheet will be described below with reference to Figs. 4(a) and 4(b). In the existing facility, a steel sheet on the wall surface portion may have poor precision due to rust. In the case where a steel sheet on the wall surface portion has poor precision, a ceramic board 22 having a large thickness (for example, 1 mm) is used instead of the ceramic sheet 21, as illustrated in Fig. 4(a). Thus, the plane electrode 2 is formed by attaching the side of the ceramic board 22 not coated with the paint 2a to a steel sheet having poor precision on the wall surface portion with an adhesive or a double-sided tape. The plane electrodes 2 may be formed over wall surface portions 11 adjacent to each other by placing the ceramic sheet 21 coated with the paint 2a on the ends of the plane electrodes 2.

When a steel sheet on the wall surface portion has high precision, the ceramic sheet 21 (for example, having a thickness of 0.25 mm) coated with the paint 2a is directly used, as illustrated in Fig. 4(b). Existing facilities have various volumes (different areas of the wall surface portion 11). In the case where the wall surface portion 11 has a larger area than the ceramic sheet 21 prepared for the execution, the ceramic sheets may be partly superposed using tack processing 21a and attached sequentially.

From the standpoint of design of a method for forming a functional space according to the present invention, grounding is required for the examples of installation of the plane electrode 2 in the storeroom 1a or 1b. This is because the criteria of measurements in the application of a negative direct voltage in the range of -70 to -100 volts (V) to the plane electrode 2 as described below are based on the criteria of the ground and because the amount of electrical charge of a coating film formed of the paint 2a on the plane electrode 2 varies with the insulation resistance value between the coating film and the ground (earth).

When wall members 10 constituting the wall surface portion or ceiling portion (chamber) to which the ceramic sheet 21 of the plane electrode 2 is to be attached are bonded together in another embodiment illustrated in Fig. 5, the wall members 10 are preferably bonded together via a frame member 13 made of a hard vinyl chloride to constitute a storeroom because this can maintain insulation of the wall surface portion or ceiling portion (chamber). In this case, for example, when a steel sheet is used on the surface of the wall members 10, insulation of the interior and exterior of the wall members 10 can be maintained by the frame member 13 made of a hard vinyl chloride, and, for example, the ceramic sheet 21 coated with the insulating paint 2a because of the steel sheet can be easily attached to a wall surface portion. After the ceramic sheet 21 and so on coated with the paint 2a are easily attached, various apparatuses and equipment, such as a manufacturing apparatus and lighting fixtures, can be fixed to the wall members 10 with screws while insulation of the apparatuses and equipment is maintained by the frame member 13 made of a hard vinyl chloride.

Such insulation effects can be further ensured when the frame member 13 made of a hard vinyl chloride has a wavy or uneven shape in the longitudinal direction, as illustrated in Fig. 5. Furthermore, the application of a negative direct voltage in the range of -70 to -100 volts to the plane electrode can produce the effects on food processing and production without causing an electric leakage, thereby providing safe and secure work environments for workers for food processing and production.

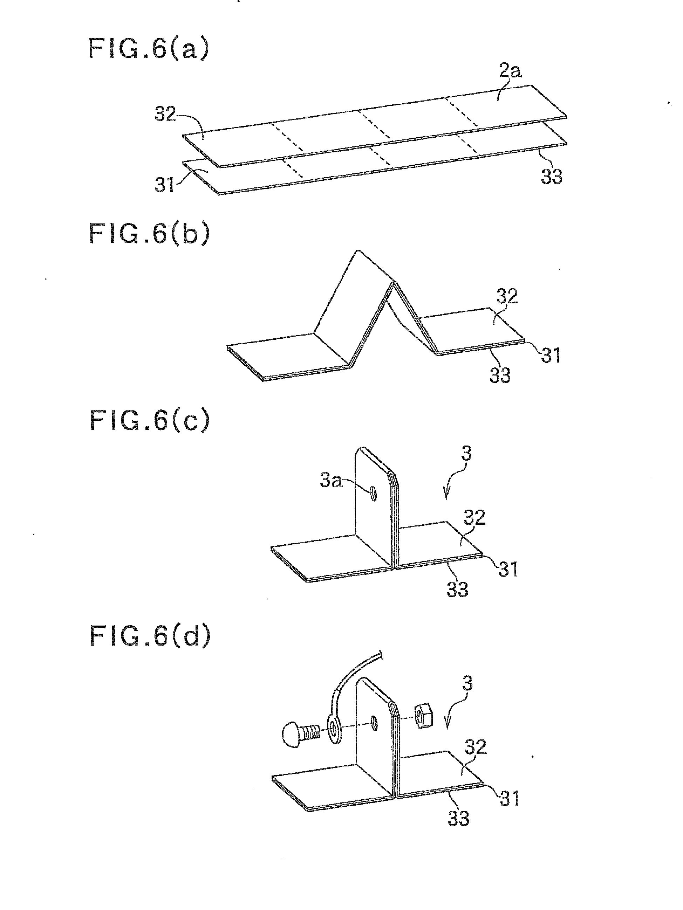

Next, a method for connecting an electric wire through which a negative voltage is applied to the paint 2a on the ceramic sheet 21 will be described below with reference to Figs. 6(a) to 6(d). An electrification member 3 illustrated in Fig. 6 is convenient for the application of a negative voltage to the paint 2a on the ceramic sheet 21.

As illustrated in Fig. 6(a), the electrification member 3 is a flat sheet (for example, 110 mm in length and 30 to 50 mm in width) formed by attaching a ceramic sheet 32 (for example, having a thickness of 0.25 mm) to one side of a soft aluminum foil 31 (for example, having a thickness of 0.08 mm) with an acrylic adhesive and attaching a release paper 33 to the other side of the soft aluminum foil 31 with an acrylic adhesive. The side of the ceramic sheet 32 to which the soft aluminum foil 31 is not attached is coated with the paint 2a.

The electrification member 3 illustrated in Fig. 6(c) is formed by bending the flat sheet four times in equal length perpendicularly to the longitudinal direction, making a mountain fold at the center in the longitudinal direction and a valley fold at one- and three-quarters in the longitudinal direction, as illustrated in Fig. 6(b), removing portions of the release paper 33 that come into contact with each other due to the mountain fold and bonding the corresponding portions of the soft aluminum foil 31, and forming a hole 3a in the bonded portions to which an electric wire (crimp terminal) is connected. As illustrated in Fig. 6(d), the electric wire is connected to the electrification member 3 by bringing the crimp terminal attached to an end of the electric wire into contact with the hole 3a and placing the crimp terminal and the hole 3a between a bolt and a nut. The release paper 33 that remains on the electrification member 3 can be removed before the electrification member 3 is attached to the plane electrode 2.

As illustrated in Figs. 1(a) and 1(b), in the storeroom 1a or 1b, carbon in graphitized charcoal or bamboo charcoal contained in the paint 2a of the plane electrode 2 is excited by application of a negative direct voltage in the range of -70 to -100 volts (V) from the electrification member 3 to the plane electrode 2 (the paint 2a) through the electric wire. This increases the electron density of the graphitized charcoal or bamboo charcoal or allowing negative charges, that is, electrons to be emitted from the graphitized charcoal or bamboo charcoal, thereby decreasing the number of positively charged fine particles in the storeroom 1a or 1b and forming a homogeneous space in which negative charges are predominant. Furthermore, in the storeroom 1a or 1b, the outside air inlet 11a or the ventilating fan 11b can be operated to circulate the air and allow electrons to act actively on foods or food materials stored in the storeroom 1a or 1b. In the space in which negative potential are predominant, the time does not stop, and the number of electrons, which are negatively charged fine particles, are decreased at the speed of light due to the ionization effect, and therefore flesh air must always be taken in through the outside air inlet 11a.

It is not necessary to increase or decrease the room temperature, for example, by heating in order to form a space in which negative charges are predominant. However, the room temperature may be increased or decreased if necessary in food or food material processing; for example, the predetermined temperature may be decreased for drying at low temperature or the drying time may be adjusted in order to control the degree of maturation. This is because an increase or decrease in the room temperature does not affect the space in which negative charges are predominant.

The negative direct voltage applied to the plane electrode 2 (the paint 2a) preferably ranges from -70 to - 100 volts (V) because this can suitably form a uniform negative charge space that is adequate for producing the effects of graphitized charcoal or bamboo charcoal. More preferably, a negative direct voltage in the range of -70 to -90 volts (V) is applied to the plane electrode 2 (the paint 2a). The reason for electrification using a negative direct voltage is based on the theory that the direct current is effective in acting on the electric potential of a food or food material.

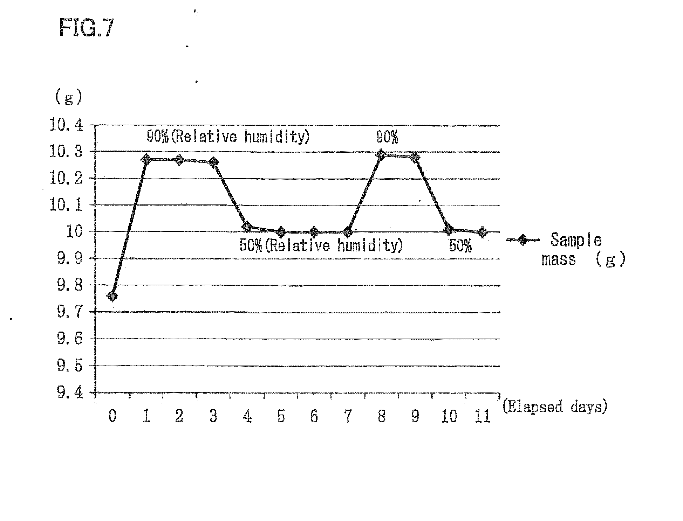

Furthermore, the humidity-control function of graphitized charcoal or bamboo charcoal in the plane electrode 2 (the paint 2a) can suppress condensation in the storeroom 1a or 1b and prevent an electric leakage when a negative direct voltage in the range of -70 to -100 volts is applied to the plane electrode. This allows the advantageous effects of the space in which negative charges are predominant to be reliably produced on food processing and production, thereby providing safe and secure work environments for workers for food processing and production. Fig. 7 shows the humidity-control function of graphitized charcoal or bamboo charcoal in the plane electrode 2 (the paint 2a). It can be understood from Fig. 7 that the mass of a plane electrode formed using graphitized charcoal or bamboo charcoal as a raw material increases to 10.2 to 10.3 g at an ambient humidity of 90% by moisture absorption and decreases to approximately 10 g at an ambient humidity of 50% by dehumidification, showing humidity control depending on the weather of the day. This contributes to prevention of condensation in the storeroom 1a or 1b. Fig. 7 was obtained from Chemicals Evaluation and Research Institute, Japan in accordance with the applicant's request.

The following describes the effects of performing a method for forming a functional space according to the present invention, storing various foods or food materials in a storeroom including a space in which negative charges are predominant, and producing or processing the food or food material stored therein.

### EXAMPLE 1

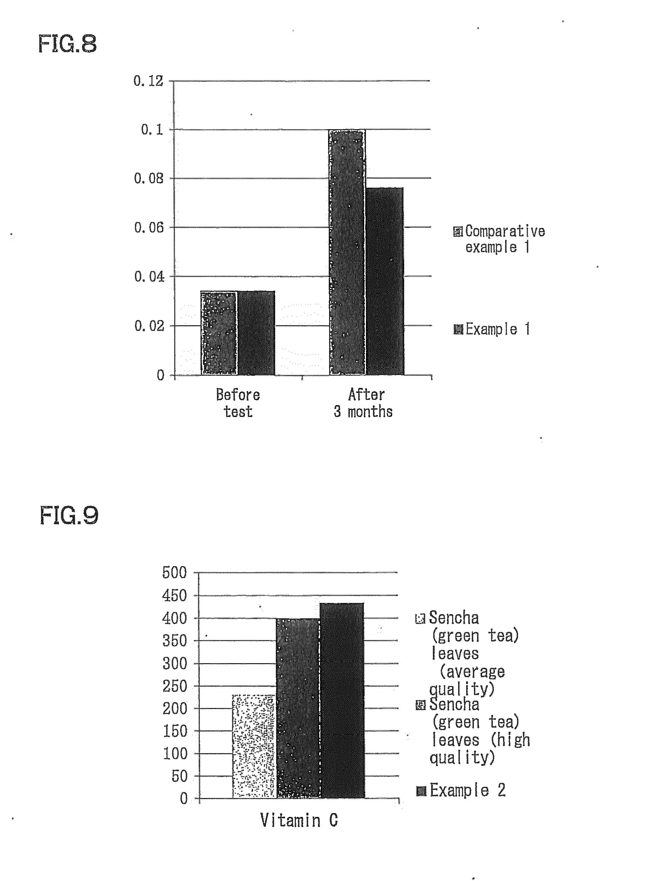

Example 1 is an example in which a plastic laboratory dish containing a commercially available salad oil was placed in a space in which negative charges were predominant in a storeroom 2 m in width, 2 m in height, and 2 m in depth formed by performing a method for forming a functional space. The laboratory dish was stored in the storeroom for 3 months, and the acid value of the oil was measured after 3 months. In Comparative Example 1, the acid value of a commercially available salad oil stored in an ordinary room for the same period of time was measured in the same manner. The results are shown as a graph in Fig. 8.

As is understood from Fig. 8, the acid value of the salad oil according to Example 1 was 0.034 before the test and 0.076 after 3 months, whereas the acid value of the salad oil according to Comparative Example 1 was 0.034 before the test and 0.100 after 3 months. Thus, Example 1 had an oxidation inhibiting effect of approximately 35% relative to Comparative Example 1.

### EXAMPLE 2

Example 2 is an example in which commercially available Sencha (green tea) leaves in a ceramic dish were placed in a space in which negative charges were predominant in a corrugated cardboard tea chest formed by performing a method for forming a functional space. The Sencha (green tea) leaves were stored in the tea chest for 65 days, and oxidative degradation was evaluated by measuring the vitamin C content. In Comparative Example 2, commercially available Sencha (green tea) leaves (medium quality) and Sencha (green tea) leaves (high quality) were obtained, and the vitamin C content was measured immediately after the procurement. The results are shown as a graph in Fig. 9.

As is understood from Fig. 9, the vitamin C content of the Sencha (green tea) leaves according to Example 2 was 433.6 mg/100 g after storage for 65 days. In contrast, the vitamin C content of the commercially available Sencha (green tea) leaves (medium quality) according to Comparative Example 2 immediately after the procurement was 230 mg/100 g, and the vitamin C content of the commercially available Sencha (green tea) leaves (high quality) immediately after the procurement was 400 mg/100 g. As illustrated in Fig. 9, therefore, the vitamin C content of the Sencha (green tea) leaves according to Example 2 even after storage for 65 days was comparable to the vitamin C content of the commercially available Sencha (green tea) leaves (high quality). Thus, the vitamin C was negligibly lost in a space in which negative charges were predominant formed by performing a method for forming a functional space according to the present invention, and the space was effective in suppressing degradation.

### EXAMPLE 3

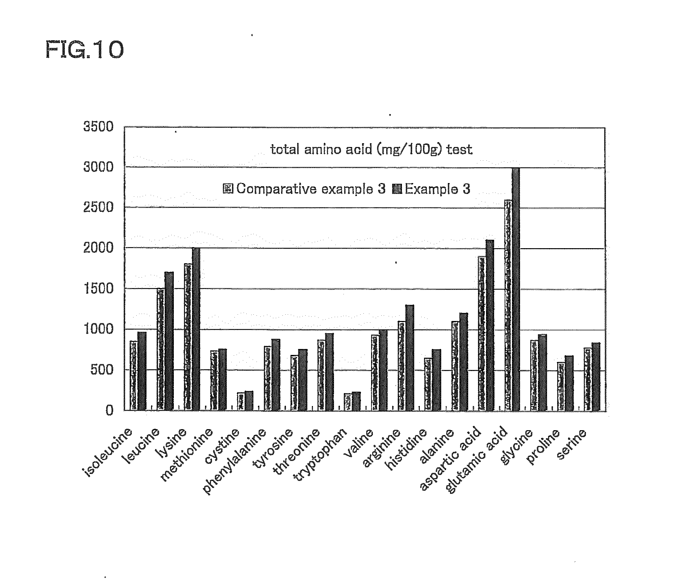

Example 3 is an example in which a method for forming a functional space was performed, and the amino acid content of fish meat of dried horse mackerel was measured. In a process step of producing dried horse mackerels from frozen horse mackerels, a method for forming a functional space according to the present invention was applied to a thawing room for use in a thawing process and a cool-air drying room for use in a drying process, and horse mackerels were thawed or dried with cool air in the spaces. Comparative Example 3 is the amino acid content of fish meat of dried horse mackerels produced in a process step using a far-infrared light thawing apparatus equipped with a ceramic heater as described in Background Art and a dryer. The results are shown as a graph in Fig. 10. The unit of the vertical axis in Fig. 10 is mg/100 g.

The volume of the thawing room is approximately 16.3 m³, and the area of a plane electrode formed in the thawing room is approximately 16.5 m². The volume of the cool-air drying room is approximately 17 m³, and the area of a plane electrode formed in the cool-air drying room is approximately 21 m².

As is understood from Fig. 10, the dried horse mackerels according to Example 3 had a higher amino acid content than the dried horse mackerels according to Comparative Example 3 for almost all the amino acid components. In particular, the contents of umami taste components aspartic acid and glutamic acid were significantly increased. The glutamic acid content is increased by 15% relative to the control. Considering that the food quality is being studied in order to improve the component by 1%, it is clear that a space in which negative charges are predominant formed in accordance with the present invention is effective in improving the quality of foods or food materials. Fig. 10 was obtained from Japan Inspection Association of Food and Food Industry Environment in accordance with the applicant's request.

### EXAMPLE 4

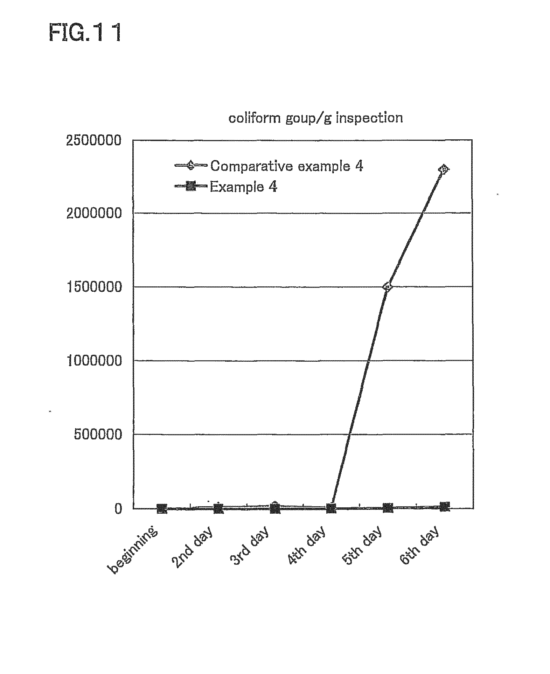

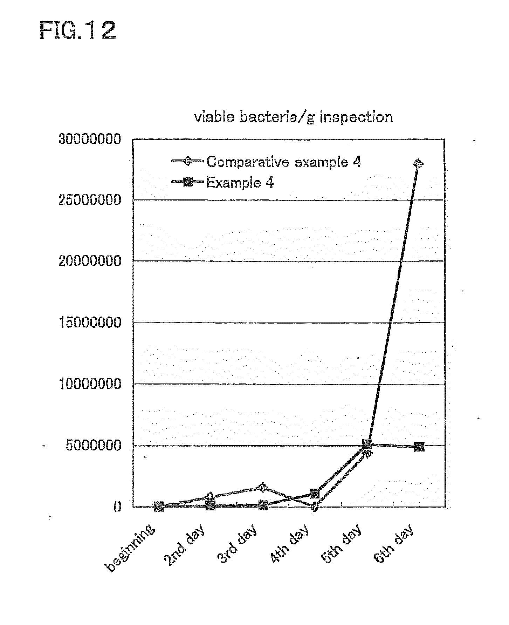

Example 4 is an example in which the dried horse mackerels used in Example 3 were placed in a test chamber at a temperature of 10°C, which assumed the temperature of a refrigerated showcase in an ordinary store, and the growth of a coliform group and viable bacteria was examined. In Comparative Example 4, the growth of a coliform group and viable bacteria was examined in the dried horse mackerels used in Comparative Example 3 in the same manner as in the example. The results are shown as a graph in Figs. 11 and 12.

As is understood from Figs. 11 and 12, the coliform group and the viable bacteria rapidly grew after 4th or 5th day in the dried horse mackerels according to Comparative Example 4, whereas the growth of the coliform group and the viable bacteria was suppressed in the dried horse mackerels according to Example 4. The bacterial count in the dried horse mackerels according to Example 4 was highest at 5th day and decreased after that. This is because the activity of fermentative bacteria, such as lactobacillus, suppressed the growth of other bacteria. Fig. 11 was obtained from Shokuhin Biseibutsu Center Co., Ltd. in accordance with the applicant's request.

### EXAMPLE 5

Example 5 is an example in which an agar medium was placed in a space in which negative charges were predominant formed by performing a method for forming a functional space. The agar medium was produced, was placed in the space, was left to stand for 10 minutes, was covered with a lid, and was then left to stand in an ordinary room for 20 days. Comparative Example 5 is an example in which production of an agar medium, leaving the agar medium to stand for 10 minutes, and leaving the agar medium to stand for 20 days with a lid closed were performed in an ordinary room.

As a result, a fermentative bacterium Saccharomyces cerevisiae grew in the agar medium according to Example 5, whereas various types of mold fungi grew in the agar medium according to Comparative Example 5. Namely, it is understood that the fungicidal effect was observed.

### EXAMPLE 6

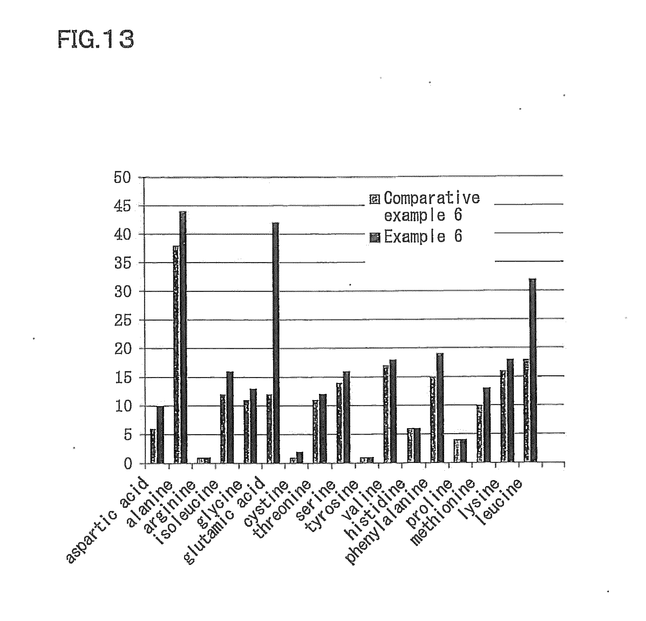

Example 6 is an example in which beef was stored and matured for 10 days in a space in which negative charges were predominant in a commercial refrigerator formed by performing a method for forming a functional space. Comparative Example 6 is beef that was stored and matured for 10 days in an ordinary commercial refrigerator. The results are shown as a graph in Fig. 13. The unit of the vertical axis in Fig. 13 is mg/g.

As is understood from Fig. 13, the beef stored in a space in which negative charges were predominant (Example 6) had a higher amino acid content than the beef according to Comparative Example 6 for almost all the amino acid components. In particular, the content of umami taste component glutamic acid was increased. In addition, the contents of branched-chain amino acids such as alanine and leucine were significantly increased. Visual observation of Example 6 and Comparative Example 6 showed the anti-dripping (liquid leakage phenomenon) effects, and this also indicated that amino acid loss in beef was suppressed. Fig. 13 was obtained from Kotobiken Medical Laboratories, Inc. in accordance with the applicant's request.

The graphitized charcoal contained in the paint used in Examples 1 to 6 was a fine powder of 1600 mesh or less and was approved as shown in [Table 1].

**[Table 1]**

| | |
|---|---|
| Incombustible material NM-0705 | Approved by Ministry of Land, Infrastructure, Transport and Tourism |
| Fungal resistance test | Applied Chemical Industry of Japan |
| Combustion gas test | Foundation of Chemicals Inspection & Testing Institute, Japan |
| VOC quantitative analysis test | Foundation of Chemicals Evaluation and Research Institute, Japan |
| Moisture absorption and desorption test | Foundation of Chemicals Inspection & Testing Institute, Japan |
| Dissolution test | Tokyo Food Sanitation Association, Food Research Laboratory |
| Formaldehyde emission grade F**** | Foundation of Chemicals Evaluation and Research Institute, Japan |
| Atmospheric concentration reduction measure equipment performance verification | Foundation of Center for Better Living |

Thus, antioxidative, anti-dripping (liquid leakage phenomenon), maturative, and bacteriostatic effects can be produced on a food or food material in a space in which negative charges are predominant in a storeroom formed using a method for forming a functional space according to the present invention. A food or food material can be produced or processed while these effects are produced thereon in the present invention. A food or food material thus produced or processed can be commercialized as a food or food material having improved quality and a new function, such as an increased amount of umami taste component.

More specifically, the present invention can produce or process a food or food material having improved quality and a new function, for example, which
(1) can suppress oxidation of oil,
(2) can suppress the vitamin C loss,
(3) can increase the amount of amino acid and improve umami taste,
(4) can suppress the growth of Escherichia coli, viable bacteria and so on,
(5) can activate fermentative bacteria, such as lactobacillus,
(6) can promote maturation of a food or food material, and
(7) can prevent degradation of cells of fish, meat, vegetables and so on prevent the dripping phenomenon, prevent nutritional component loss, and increase the amount of umami taste component.

Although several embodiments that the present applicant believes to be best modes have been described in detail above, the present invention is not limited to these embodiments without departing from the matters described in the appended claims and can be subjected to various design changes. For example, although the graphitized charcoal or bamboo charcoal contained in the paint used in Examples 1 to 6 is a fine powder of 1600 mesh or less, the graphitized charcoal or bamboo charcoal may be a fine powder of a slightly increased mesh size, provided that the object of the present invention can be achieved with the charcoal or bamboo charcoal. The storeroom may have various additional functions, such as refrigeration and freezing.

### Industrial Applicability

The present invention can block electromagnetic waves (in particular, long-wavelength radio waves), which may affect not only the living body but also a process of processing or producing a food or food material, utilizing the semiconducting properties of graphitized charcoal or bamboo charcoal and can form a space containing attenuated electromagnetic waves in a storeroom. More specifically, in processing or production of a food or food material, the semiconducting properties of graphitized charcoal or bamboo charcoal prevent electromagnetic waves generated by or entering from equipment or machines (a ventilating fan, a chamber drive unit, a heat source, lighting fixtures, or electric wiring) or the outside from affecting the umami taste, body, aroma, and oxidizing and reducing ability of the food or food material and reducing the quality of the food or food material. Thus, the present invention can develop a food or food material having a new function by making an effort to improve the quality of the food or food material in a space having increased reducing ability by application of a negative direct voltage to excite carbon in graphitized charcoal or bamboo charcoal and preventing deterioration in the quality of the food or food material in a space in which electromagnetic waves are blocked.

### Explanation of Reference Numerals

- 1a: storeroom
- 1b: storeroom
- 10: wall material
- 11: wall surface portion
- 11a: outside air inlet
- 11b: ventilating fan
- 111: external corner
- 112: internal corner
- 12: ceiling portion
- 12a: chamber
- 13: frame member (made of hard vinyl chloride)
- 2: plane electrode
- 2a: paint
- 20: underlining
- 21: ceramic sheet
- 21a: tack processing
- 22: ceramic board
- 3: electrification member
- 31: soft aluminum foil
- 32: ceramic sheet
- 33: release paper
- 3a: hole
- A: filler
- B: screw

## Claims

1. A method for forming a functional space that can produce antioxidative, anti-dripping, maturative, and bacteriostatic effects on a food or food material, comprising the steps of:
applying a paint composed mainly of graphitized charcoal or bamboo charcoal to a flat insulator in such an amount that the insulator has a resistance value of 3 ± 1 kilohms, and forming a plane electrode with the insulator coated with the paint, the plane electrode having an area of at least one-half the volume of a storeroom for storing the food or food material;
attaching a side of the plane electrode to which the paint is not applied to an inner wall or ceiling or both of the storeroom; and
applying a negative direct voltage in the range of -70 to -100 volts to the plane electrode to form a space in which negative charges are predominant in the storeroom.

2. The method for forming a functional space according to Claim 1, wherein the storeroom is composed of wall materials joined together via a frame member made of a hard vinyl chloride.

3. A method for producing or processing a food or food material, comprising: forming a space in which negative charges are predominant in a storeroom using the method for forming a functional space according to Claim 1; and producing or processing the food or food material under antioxidative, anti-dripping, maturative, and bacteriostatic effects.

4. A method for producing or processing a food or food material, comprising: storing the food or food material in a storeroom for a predetermined period of time, the storeroom having a space in which negative charges are predominant formed using the method for forming a functional space according to Claim 1; and producing or processing the food or food material under microbial control for the predetermined period of time.
